**Europäisches Patentamt**

**European Patent Office**

**Office européen des brevets**

(19)

(11) Veröffentlichungsnummer: **0 021 249**
A1

# (12) EUROPÄISCHE PATENTANMELDUNG

(21) Anmeldenummer: **80103249.1**

(22) Anmeldetag: **11.06.80**

(51) Int. Cl.³: **F 16 D 1/10**, B 29 F 1/06

(30) Priorität: **21.06.79 CH 5824/79**

(43) Veröffentlichungstag der Anmeldung: **07.01.81**
**Patentblatt 81/1**

(84) Benannte Vertragsstaaten: **CH DE FR GB IT LI**

(71) Anmelder: **Gebrüder Bühler AG, CH-9240 Uzwil (CH)**

(72) Erfinder: **Walser, Bruno, Wiesenweg 2,**
**CH-9203 Niederwil (CH)**

(74) Vertreter: **Blum, Rudolf E. et al, c/o E. Blum & Co**
**Patentanwälte Vorderberg 11, CH-8044 Zürich (CH)**

(54) **Kupplung für die Plastifizierschnecke einer Spritzgiessmaschine zur Verarbeitung von Kunststoff.**

(57) Eine Kupplung, die insbesondere zur Verbindung der Plastifizierschnecke einer Spritzgießmaschine mit einem Antrieb dient, weist schneckenseitig ein Kupplungsteil mit einem Flachstück (50) und antriebsseitig einen Kupplungskopf (40) mit einem passend zur Aufnahme des Flachstückes (50) gestalteten Querschlitz (5) auf. Eine Zentrierung ist über einen Zentrierzapfen (20) am Flachstück (50) bewirkt, der in eine Zentrierbohrung (11) am Kupplungskopf (40) paßt. Das Flachstück (50) und der Kupplungskopf (40) sind über einen Kupplungsring zusammengehalten, der über Bajonettverbindungen mit dem Flachstück (50) bzw. dem Kupplungskopf (40) verbindbar ist. Die Öffnungen (23, 25), durch welche das Flachstück (50) und der Kupplungskopf (40) in den Kupplungsring (21) eingeschoben werden, sind im Winkel zueinander versetzt, so daß keine gemeinsame Drehlage existiert, bei der beide Kupplungsteile (4, 15) aus dem Kupplungsring herausziehbar sind. In beide Kupplungsteile (4, 15) gegen ein Herausziehen sperrender Drehlage läßt sich die Verbindung durch Rastvorrichtungen (30) sichern, welche ein Verdrehen in eine solche Drehlage gestatten, daß der schneckenseitige Kupplungsteil mit dem Flachstück (50) aus dem Kupplungsring (21) herausziehbar und somit die Schnecke schnell und ohne Werkzeuge auswechselbar ist.

-1-

Kupplung für die Plastifizierschnecke
einer Spritzgiessmaschine zur Verarbeitung
von Kunststoff
-------------------------------------------

Die Erfindung betrifft eine Kupplung für die Plastifizierschnecke einer Spritzgiessmaschine zur Verarbeitung von Kunststoff, mit zwei Kupplungsteilen, die zum Zwecke der Drehmomentübertragung mittels Endprofilen ineinandergreifen.

Eine Kupplung dieser Art zum Verbinden zweier Wellen ist aus der DE-OS 27 35 002 bekannt. Bei dieser Kupplung sind zur Aufnahme axialer Zugkräfte im einen Kupplungsteil Kugeln vorgesehen, die bei geschlossener Kupplung in eine Ringnut des andern Kupplungsteiles eingreifen. Das Festsetzen bzw. Lösen der Verbindung wird durch eine axial verschiebbare Hülse auf dem einen Kupplungsteil bewerkstelligt, welche die erwähnten Kugeln entweder blockiert oder freigibt. Diese Ausgestaltung bewirkt, dass bei Uebertragung von Axialkräften, wie sie in Spritzgiessmaschinen auftreten, die Belastung der Kugeln jeweils in einzelnen Berührungspunkten auftritt, wodurch die Grösse der übertragbaren Kräfte stark beschränkt wird. Eine Ueberlast hat ein Anfressen der genannten Ringnut, die Deformation oder Zerstörung der Kugeln oder gar ein Sprengen der Hülse zur Folge.

Aus der CH-PS 450 867 ist ferner eine Werkzeugspanneinrichtung bekannt, die ebenfalls zwei Kupplungsteile der eingangs genannten Art aufweist. Auf den einen Kupplungsteil ist dabei ein Kupplungsring aufgeschraubt, welcher axiale Anschlagflächen für den anderen Kupplungsteil aufweist. Durch Verdrehen des Kupplungsringes wird dieser axial verschoben und presst dadurch die Kupplungs-

-2-

teile gegeneinander. Die Konstruktion dieser Kupplung ist wegen der nötigen Gewindeanordnungen aufwendig und im Betrieb störungsanfällig. Bei starker axialer Zugbeanspruchung - wie sie bei Spritzgiessmaschinen auftreten können - besteht die Gefahr, dass der Kupplungsring im Gewinde festsitzt und die leichte Lösbarkeit nicht gewährleistet ist. Zudem ist die Spannwirkung der Kupplung unerwünscht.

Der Erfindung liegt die Aufgabe zugrunde, eine Kupplung der eingangs genannten Art zu schaffen, die bei einfachem Aufbau ohne Anwendung von Werkzeugen mittels einfacher Handgriffe schnell verbindbar und lösbar ist und ausser Drehmomenten auch beträchtliche Zugkräfte zu übertragen in der Lage ist.

Zur Lösung dieser Aufgabe ist bei einer Kupplung der eingangs genannten Art vorgesehen, dass zum Zusammenhalten der Kupplungsteile am einen derselben ein darauf in der Achsrichtung unbewegbarer Kupplungsring lösbar angeordnet ist, an dessen mit den beiden Kupplungsteilen zusammenwirkendem Innenmantel für jeden dieser Kupplungsteile axiale Anschlagflächen ausgebildet und jeweils durch ein handbetätigtes Verdrehen des Kupplungsringes mit entsprechenden Schulterflächen der Kupplungsteile in formschlüssige Verbindung bringbar bzw. von diesem lösbar sind.

Vorzugsweise weisen der Kupplungsring und eines der beiden Kupplungsteile Mittel zum Führen und Begrenzen der Ringdrehung beim An- bzw. Entkoppeln der Kupplungsteile sowie zur Sicherung des Kupplungsringes im an- bzw. ent. koppelten Zustand auf.

Gemäss einer vorteilhaften Weiterbildung der Erfindung ist vorgesehen, dass der Kupplungsring auf seinen beiden Stirnseiten je eine entsprechend dem aufzunehmenden Kupplungsteil profilierte Oeffnung aufweist, und dass die

-3-

Anschlagflächen axial anschliessend an eine der Oeffnungen
an Hinterschneidungen ausgebildet sind.

Bei der Kupplung nach der Erfindung ist durch
den Kupplungsring eine doppelte Bajonettverbindung geschaffen, bei der beide Kupplungsteile nach Einführen
in die entsprechenden Oeffnungen auf entgegengesetzten
Seiten des Kupplungsringes und Verdrehen des letzteren
um einen gewissen Winkel, der vorteilhaft 90$^{o}$ betragen
kann, hinter die Hinterschneidungen greifen und dadurch
in ihrer axialen Lage zueinander und zum Kupplungsring
fixiert sind. Ueber die Schulterflächen an den Kupplungsteilen und die Anschlagflächen an den Hinterschneidungen
des Kupplungsringes lassen sich beträchtliche Zugkräfte
übertragen. Die Kupplung ist aufgrund ihrer Konzeption
als doppelter Bajonettverschluss einfach und ohne Hilfsmittel durch Verdrehen des Kupplungsringes und Herausziehen des einen Kupplungsteiles schnell von Hand lösbar
und wieder kuppelbar, so dass beispielsweise ein mit dem
einen Kupplungsteil verbundenes Werkzeug, wie die Schnecke
einer Spritzgiessmaschine, schnell austauschbar ist.

Bei einer weiteren Ausgestaltung einer Kupplung
nach der Erfindung ist vorgesehen, dass die unterschiedlich profilierten Oeffnungen symmetrisch mindestens zu
einer jeweils in der Oeffnungsebene liegenden Hauptachse ausgestaltet und diese Hauptachsen um einen Winkel
versetzt angeordnet sind.

Aufgrund dieser Ausgestaltung der Erfindung
ist ein Entfernen und Kuppeln des einen Kupplungsteiles,
wie das mit der Schnecke einer Spritzgiessmaschine verbundene Kupplungsteil, nur in einer Drehlage des Kupplungsringes möglich, in welcher das andere Kupplungsteil, wie
das antriebsseitige Kupplungsteil, mit dem Kupplungsring verriegelt ist. Dies ist erwünscht und von Vorteil

-4-

insofern, als der Kupplungsring auch bei einem entfernten Kupplungsteil noch an dem anderen Kupplungsteil gehalten bleibt.

Bei einer konstruktiven Ausgestaltung ist vorgesehen, dass das erste Kupplungsteil einen von einem diametralen Querschlitz durchsetzten Kupplungskopf und das zweite Kupplungsteil an seinem Ende ein in den Querschlitz passendes Flachstück aufweisen, und das Flachstück einen Zentrierzapfen trägt, der in eine im ersten Kupplungsteil vorgesehene Zentrierbohrung einsteckbar ist, und dass Kupplungskopf und Flachstück vom Rest des jeweiligen Kupplungsteils je durch eine das betreffende Kupplungsteil teilweise umgebende Umfangsnut abgesetzt sind und dass die auf diese Weise am Kupplungskopf und am Flachstück paarweise gebildeten kreisbogenförmigen Schulterflächen zum Uebertragen einer Zug- bzw. Druckbeanspruchung mit den entsprechenden ebenfalls paarweise und kreisbogenförmig ausgebildeten Anschlagflächen an den Hinterschneidungen am Kupplungsring zusammenwirken.

Es ist von Vorteil, wenn das Flachstück einen Zentrierzapfen trägt, der in eine im ersten Kupplungsteil vorgesehene Zentrierbohrung passt. Hierdurch wird vermieden, dass die das Drehmoment übertragenden Bereiche der Kupplung gleichzeitig zur Zentrierung dienen, was hinsichtlich der für die Zentrierung einzuhaltenden Fertigungstoleranzen problematisch wäre.

Die Mittel zum Führen und Begrenzen der Drehbewegung und zur Sicherung des Kupplungsringes in den beiden Endstellungen umfassen zwei auf entgegengesetzten Seiten der einen Oeffnung des Kupplungsringes diametral einander gegenüber angeordnete Rastvorrichtungen je mit einer federbelasteten Rastkugel, die beim Drehen des Kupplungsringes in kreisbogenförmigen Kerben in den radialen Endflächen beidseits des Querschlitzes des ersten Kupplungsteiles geführt und zur Sicherung der erreichten Stellung jeweils am Ende der Drehbewegung in je einer an die Kerben anschliessenden Kugelkalotte festgehalten werden. In der einen Grenzstellung lässt sich nur das Kupplungsteil mit dem Flachstück aus dem Kupplungsring herausziehen, während in der anderen Grenzstellung beide Kupplungsteile mit dem Kupplungsring gegen ein Herausziehen axial verriegelt sind. Zur Sicherung kann dabei der Querschlitz beidseitig durch zwei Stege begrenzt sein, die von den radialen Endflächen des ersten Kupplungsteils hochragen und sich beim An- bzw. Entkoppeln der Kupplungsteile den Rastvorrichtungen entgegenstellend ein Ueberdrehen des Kupplungsringes über die Kugelkalotten hinaus verhindern.

Gemäss einer weiteren Ausgestaltung der Erfindung kann der Kupplungsring aus einem Material bestehen, das durch kleinere Beanspruchung verformbar ist als dasjenige der Kupplungsteile. Bei Ueberbeanspruchung, beispielsweise durch Zug, verformt sich der Kupplungsring und verhütet dadurch Beschädigungen der ineinandergreifenden Enden der Kupplungsteile.

Die Kupplung nach der Erfindung eignet sich besonders für die Anwendung zum Verbinden einer Plastifizierschnecke einer Spritzgiessmaschine mit einem Antrieb, wobei insbesondere beim Schneckenrückhub zur Entlastung der Kunststoffschmelze im düsenseitigen Schneckenvorraum jeweils nach einer Plastifizierungsphase beträchtliche Zugkräfte von der Kupplung übertragen werden müssen und wobei die Schnecke im Betrieb öfters gewechselt werden muss. Die Fähigkeit der Kupplung nach der Erfindung, neben Drehmomenten auch hohe Zugkräfte zu übertragen und ein raschen Lösen und Kuppeln zu ermöglichen, kommt bei diesem

-6-

Anwendungsfall besonders zur Geltung.

Ein weiterer Vorteil ist, dass mit ein und demselben Kupplungring und ein und demselben Kupplungskopf mit Querschlitz Gegenkupplungsteile an Wellen mit innerhalb eines gewissen Bereiches variierenden Durchmessern verwenden werden können.

Dies ermöglicht im Anwendungsfall bei der Spritzgiessmaschine, dass mit ein- und derselben Kupplung ein Antrieb mit unterschiedlich grossen Schneckenwellen verbunden werden kann.

Mit der Kupplung nach der Erfindung lässt sich aber auch in anderen Anwendungsfällen ein Drehmoment und eine Zugkraft sicher und spielfrei übertragen.

Die Erfindung ist im folgenden anhand schematischer Zeichnungen an einem Ausführungsbeispiel mit weiteren Einzelheiten näher erläutert. Es zeigen:

Fig. 1 eine Explosions-Darstellung der Teile einer Kupplung nach der Erfindung;

Fig. 2 die Ansicht der einen Stirnseite eines Kupplungsringes der Kupplung nach Fig. 1;

Fig. 3 einen Schnitt nach der Linie III-III in Fig. 2;

Fig. 4 eine Ansicht des Kupplungsringes nach Fig. 2 mit einem Halbschnitt nach der Linie IV-IV in Fig. 2;

Fig. 5 eine Ansicht der anderen Stirnseite des Kupplungsringes gemäss den Fig. 2 bis 4 und die Stirnansichten zweier Kupplungsteile in Drehlagen, die ein Einschieben in die entsprechenden Oeffnungen des Kupplungsringes gestatten;

Fig. 6 und 7 Axialschnitte durch die Kupplung in montiertem Zustand nach den Linien VI-VI und VII-VII in Fig. 5, wobei das ein Flachstück aufweisende Kupplungsteil nicht geschnitten gezeichnet ist, und zwar aus

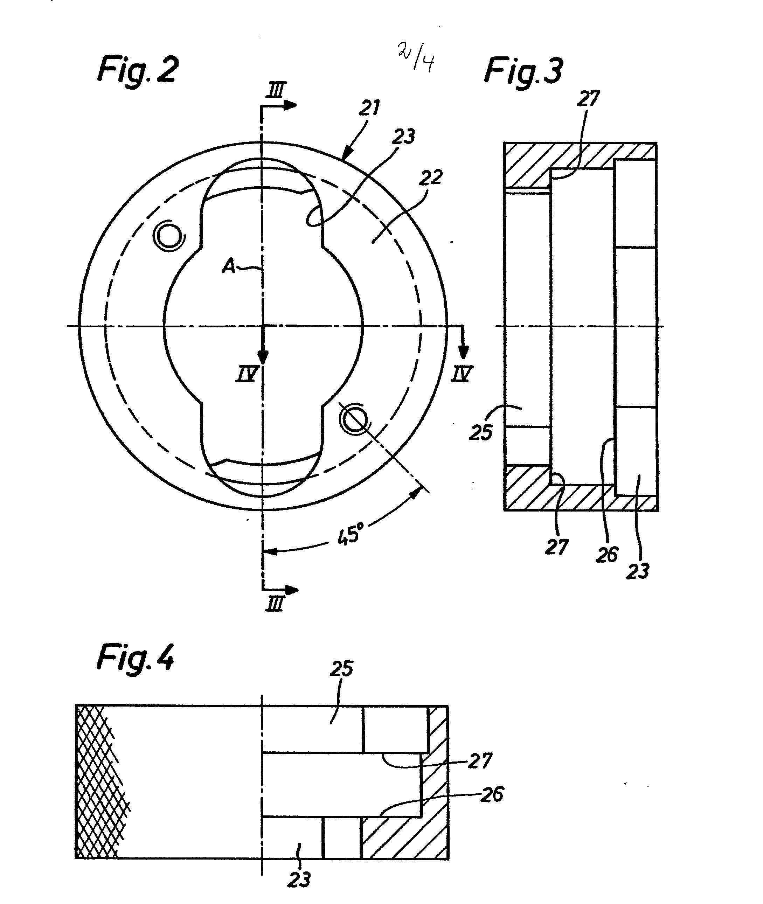

Gründen der Klarheit mit anderen Massverhältnissen als in den Fig. 2 bis 5.

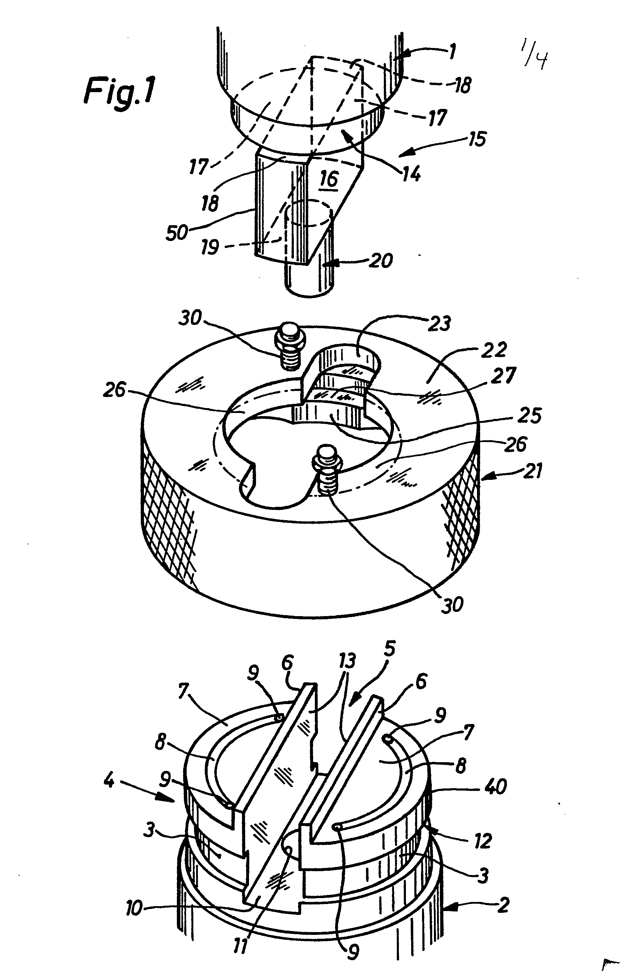

Fig. 1 zeigt die beiden Teile 4,15 einer Kupplung zur Verbindung einer Schneckenwelle 1 einer nicht gezeigten Plastifizierschnecke einer Kunststoff-Spritzgiessmaschine mit einer Abtriebswelle 2 eines nicht gezeigten Antriebes. Die Abtriebswelle 2 geht über eine Umfangsnut 3 in einem Kupplungskopf 40 über, welcher von einem Querschlitz 5 durchsetzt ist. Der Querschlitz 5 ist beidseitig von Stegen 6 begrenzt, die von in einer gemeinsamen Ebene liegenden radialen Endflächen 7 am Ende des Kupplungskopfes 40 hochragen. In diesen Endflächen 7 ist je eine bogenförmige Kerbe 8 mit halbkreisförmigem Querschnitt und Kugelkalotten 9 an den beiden Enden eingearbeitet.

Vom Boden 10 des Querschlitzes 5 geht eine Zentrierbohrung 11 aus, deren Achse mit derjenigen der Abtriebswelle 2 zusammenfällt. Die kupplungskopfseitige Wand der Nut 3 bildet eine Schulterfläche 12.

Der Querschlitz 5 hat drehmomentübertragende Seitenflächen 13.

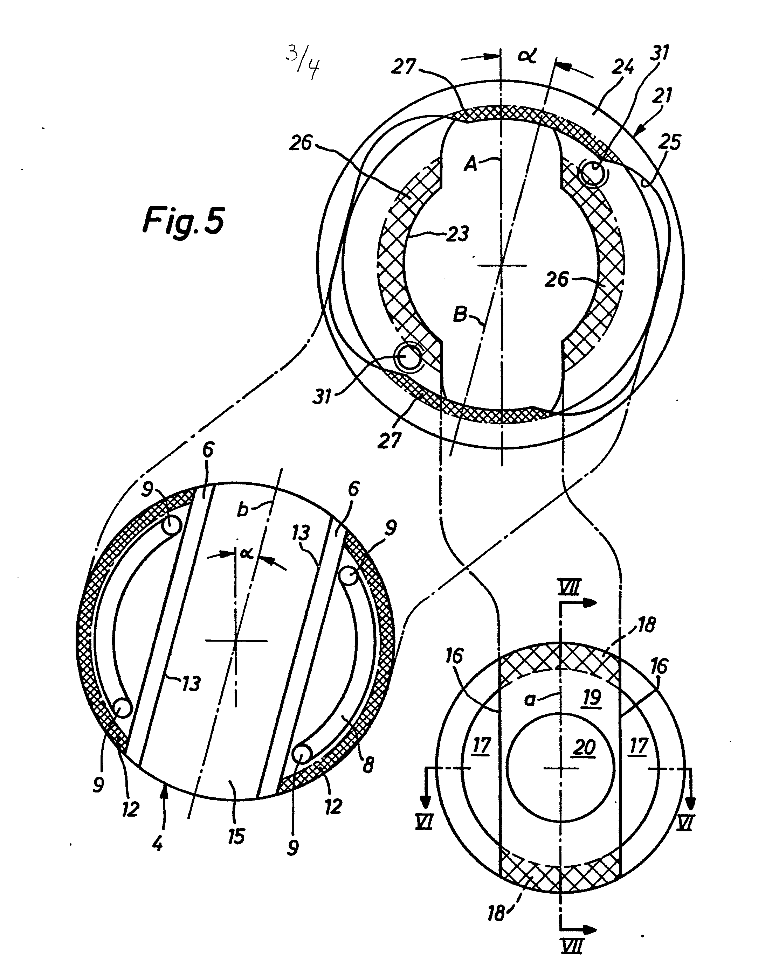

Die Schneckenwelle 1 geht über einen Bund 14 in ein Flachstück 50 über, das in etwa so breit wie der Abstand der Wände 13 des Schlitzes 5 ist. Das Flachstück 50 hat drehmomentübertragende Flachseiten 16, die mit den Seitenwänden 13 des Querschlitzes 5 zusammenwirken können. Der Bund 14 hat geringeren Durchmesser als die Schneckenwelle 1. Im mittleren Bereich kragt der Bund 14 mit in Fig. 1 unsichtbaren, in Fig. 5 jedoch sichtbaren Flächen 17 über die Flachseiten 16, während die schmalen Enden des Flachstückes 50 über den Bund 14 überkragen und Schulterflächen 18 bilden. Von der Endfläche 19 des Flachstückes 15 geht ein zylindrischer Zentrierzapfen 20

-8-

aus, der in die Zentrierbohrung 11 passend gestaltet ist.

In Fig. 1 ist auch ein Kupplungsring 21 gezeigt, dessen eine, in Fig. 1 sichtbare Stirnansicht in Fig. 2 und dessen andere, in Fig. 1 unsichtbare Stirnansicht in Fig. 5 dargestellt sind. Die Gestalt des Kupplungsringes ergibt sich ferner aus den Fig. 3 und 4.

Auf der in Fig. 2 sichtbaren Stirnfläche 22 hat der Kupplungsring eine längliche Oeffnung 23, deren Länge und Breite so bemessen sind, dass das Flachstück 50 bequem in die Oeffnung 23 einschiebbar ist. Die Oeffnung 23 ist achsensymmetrisch ausgebildet, und die sich in Längsrichtung der Oeffnung 23 erstreckende Hauptachse ist in den Figuren 2 und 5 mit dem Buchstaben A bezeichnet, während die entsprechende Hauptachse des Flachstückes 50 in Fig. 5 mit a bezeichnet ist. Beim Einschieben des Flachstückes 50 in die Oeffnung 23 fallen die Achsen A und a etwa zusammen.

In der anderen Stirnseite 24 (Fig. 5) hat der Kupplungsring 21 eine ebenfalls achsensymmetrisch gestaltete Oeffnung 25, die grösser als die Oeffnung 23 ist und zu dieser eine um den Winkel $\alpha$ verdrehte Achsenlage ihrer Hauptachse B hat. Der Winkel $\alpha$ beträgt bei der bevorzugten Ausführung 15$^{\circ}$. In die Oeffnung 25 ist der Kupplungskopf 40 an der Antriebswelle 2 in einer Achsenlage einschiebbar, in der sich seine Hauptachse b mit der Achse B deckt. Die Oeffnungen 23 und 25 sind hinterschnitten. Die Flächen und die Tiefe der Hinterschneidungen sind aus den Fig. 2 bis 5 am besten ersichtlich. In der Stirnansicht der Fig. 5 des Kupplungsringes 21 sind hinter der Oeffnung 23 Anschlagflächen 26 gezeichnet, die in eingestecktem und verdrehtem Zustand des Flachstückes 50 mit den Schulterflächen 18 am Flachstück 50 zur Zugkraftübertragung zusammenwirken. Der Kupplungskopf 40

-9-

ist in Fig. 5 in einer Lage gezeigt, die in bezug auf die Lage beim Ueberstülpen des Kupplungsringes 21 um 180$^{\circ}$ um eine in der Zeichenebene liegende Achse umgekippt erscheint.

Die Schulterflächen 12 (s. auch Fig. 1) wirken in eingesteckter Lage des Kupplungskopfes 40 mit Anschlagflächen 27 unter der Hinterschneidung der Oeffnung 25 in einer verdrehten Lage des Kupplungskopfes 40 gegenüber dem Kupplungsring 21 zusammen, bei welcher die Achsen B und b nicht mehr fluchten.

Auf die beschriebene Weise schafft der Kupplungsring 21 eine doppelte Bajonettverbindung sowohl mit dem Flachtstück 50 an der Schneckenwelle 1 als auch mit dem Kupplungskopf 40 an der Abtriebswelle 2.

Die Anordnung mit der Winkelverlagerung um den Winkel $\alpha$ zwischen den beiden Oeffnungen 23 und 25 gewährleistet, dass entweder das Flachstück 50 oder der Kupplungskopf 40 sich bereits in verriegelter Drehlage befinden, wenn das andere Teil in den Kupplungsring 21 eingeschoben werden soll.

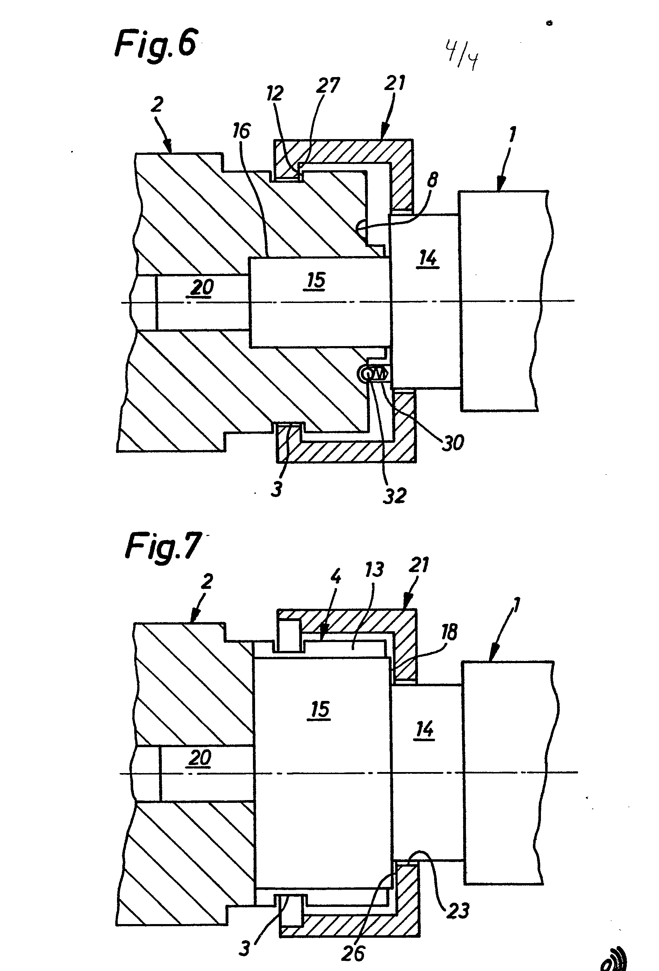

Um beide Teile gegenüber dem Kupplungsring 21 zu verriegeln, sind diametral gegenüberliegend auf dem gleichen Umfang zwei Rastvorrichtungen 30 mit federbelasteten Rastkugeln 32 in Gewindelöcher 31 am Kupplungsring 21 durch Verschrauben lösbar befestigt. In Betriebslage sind die Rastvorrichtungen 30 so tief in den Kupplungsring 21 eingeschraubt, dass ihre Rastkugeln 32 (s. Fig. 6) in den Nuten 8 laufen und in jeweils einer der Kugelkalotten 9 an den Enden der Nuten 8 einschnappen können. Durch die Kugelkalotten 9 werden die Grenzlagen für die Verdrehung des Kupplungsringes gegenüber dem Kupplungsteil 4 festgelegt. In der in Fig. 5 gezeigten Lage wirkt die rechts von der Achse B angeordnete Rastvorrichtung 30 mit der rechts von der Achse b liegenden unteren Kugelkalotte und die in Fig. 5 links von der Achse B liegende Rastvorrichtung mit der links von der Achse b am oberen Rande der Nut 8 liegenden Kugelkalotte 9 zusammen. In dieser Lage lässt sich das Flachstück 50 einschieben. In der verdrehten Lage, in der die beiden anderen Kugelkalotten 9 mit den Rastvorrichtungen zusammenwirken, sind beide Kupplungsteile 4,15 mit dem Kupplungsring 21 verriegelt. Eine solche Lage ist in den Fig. 6 und 7 gezeigt. Diese Verriegelungslage ist dadurch erreicht, dass zunächst der Kupplungsring 21 auf den Kupplungskopf 40 in der beschriebenen Weise verriegelt ist. Dabei greifen die Schulterflächen 12 hinter die Anschlagflächen 27, welche durch die Hinterschneidung der Oeffnung 25 gebildet sind. Mit anderen Worten ragt die Oeffnung über ihre Tiefe in die Umfangsnut 3, welche den Kupplungskopf abtriebswellenseitig begrenzt.

Anschliessend ist das Flachstück 50 am Ende der Schneckenwelle 1 in die Oeffnung 23 eingeschoben und relativ zum Kupplungsring 21 verdreht, so dass das Flachstück 50 die Hinterschneidung hinter der Oeffnung 23 hintergreift, wobei die Schulterflächen 18 mit Anschlagflächen 26 am Kupplungsring 21 zusammenwirken. In der verriegelten Lage ist somit über die Flächen 13 und 16 eine Drehmomentübertragung und über die Flächenpaare 18, 26 bzw. 12,127 eine Zugkraftübertragung ermöglicht. Es ist ersichtlich, dass über entgegengesetzte Flächen ebenso natürlich auch eine Druckkraftübertragung über die beschriebene Kupplung möglich ist.

Die Kupplung lässt sich durch Ausbildung der Verbindung zwischen Kupplungsring 21 und Schneckenwelle 1 bzw. Abtriebswelle 2 als Bajonettverbindungen schnell und einfach ohne besondere Werkzeuge von Hand lösen und verbinden, wobei aufgrund der verdrehten Anordnung der Bajonettverbindung ein Auseinanderfallen der Teile vermieden ist.

-1-

Patentansprüche
--------------------------------

1. Kupplung für die Plastifizierschnecke
einer Spritzgiessmaschine zur Verarbeitung von Kunststoff,
mit zwei Kupplungsteilen (4,15), die zum Zwecke der Drehmomentübertragung mittels Endprofilen (5,5o) ineinandergreifen, dadurch gekennzeichnet, dass zum Zusammenhalten
der Kupplungsteile (4,15) am einen derselben ein darauf
in der Achsrichtung unbewegbarer Kupplungsring (21) lösbar angeordnet ist, an dessen mit den beiden Kupplungsteilen (4,15) zusammenwirkendem Innenmantel für jeden
dieser Kupplungsteile axiale Anschlagflächen (26,27) ausgebildet und jeweils durch ein handbetätigtes Verdrehen
des Kupplungsringes (21) mit entsprechenden Schulterflächen
(12,18) der Kupplungsteile (4,15) in formschlüssige Verbindung bringbar bzw. von diesem lösbar sind.

2. Kupplung nach Anspruch 1, dadurch gekennzeichnet, dass der Kupplungsring (21) und eines (4) der
beiden Kupplungsteile (4,15) Mittel (8,9,30,32) zum Führen
und Begrenzen der Ringdrehung beim An- bzw. Entkoppeln
der Kupplungsteile (4,15) sowie zur Sicherung des Kupplungsringes (21) im an- bzw. entkoppelten Zustand aufweisen.

Sb/str                                    EU 1051
30.5.1980

3. Kupplung nach Anspruch 1 oder 2, dadurch gekennzeichnet, dass die Ringdrehung zum An- bzw. Entkoppeln der Kupplungsteile (4,15) jeweils 90° beträgt.

4. Kupplung nach einem der Ansprüche 1 bis 3, dadurch gekennzeichnet, dass der Kupplungsring (21) auf seinen beiden Stirnseiten (22,24) je eine entsprechend dem aufzunehmenden Kupplungsteil (4 oder 15) profilierte Oeffnung (23,25) aufweist, und dass die Anschlagflächen (26,27) axial anschliessend an eine der Oeffnungen (23,25) an Hinterschneidungen ausgebildet sind.

5. Kupplung nach Anspruch 4, dadurch gekennzeichnet, dass die beiden unterschiedlich profilierten Oeffnungen (23,25) symmetrisch mindestens zu einer jeweils in der Oeffnungsebene liegenden Hauptachse (A,B) ausgestaltet und diese Hauptachsen (A,B) um einen Winkel (α) versetzt angeordnet sind.

6. Kupplung nach Anspruch 1,4 und 5, wobei das erste Kupplungsteil (4) einen von einem diametralen Querschlitz (5) durchsetzten Kupplungskopf (40) und das zweite Kupplungsteil (15) an seinem Ende ein in den Querschlitz (5) passendes Flachstück (50) aufweisen, und das Flachstück (50) einen Zentrierzapfen (20) trägt, der in eine im ersten Kupplungsteil (4) vorgesehene Zentrierbohrung (11) einsteckbar ist, dadurch gekennzeichnet, dass Kupplungsstück (40) und Flachstück (50) vom Rest des jeweiligen Kupplungsteiles (4 bzw. 15) je durch eine das betreffende Kupplungsteil (4,15) teilweise umgebende Umfangsnut (3,14) abgesetzt sind, und dass die auf diese Weise am Kupplungskopf (40) und am Flachstück (50) paarweise gebildeten kreisbogenförmigen Schulterflächen (12, 18) zum Uebertragen einer Zug- bzw. Druckbeanspruchung mit den entsprechenden ebenfalls paarweise und kreis-

0021249

-3-

bogenförmig ausgebildeten Anschlagflächen (26,27) an den Hinterschneidungen am Kupplungsring (21) zusammenwirken.

7. Kupplungsring nach einem der Ansprüche 2 bis 6, dadurch gekennzeichnet, dass die Mittel zum Führen und Begrenzen der Drehbewegung und zur Sicherung des Kupplungsringes (21) in den beiden Endstellungen zwei auf entgegengesetzten Seiten der einen Oeffnung (23) des Kupplungsringes (21) diametral einander gegenüber angeordnete Rastvorrichtungen (30) je mit einer federbelasteten Rastkugel (32) umfassen, die beim Drehen des Kupplungsringes (21) in kreisbogenförmigen Kerben (8) in den radialen Endflächen (7) beidseits des Querschlitzes des ersten Kupplungsteiles (4) geführt und zur Sicherung der erreichten Stellung jeweils am Ende der Drehbewegung in je einer an die Kerben (8) anschliessenden Kugelkalotte (9) festgehalten werden.

8. Kupplung nach Anspruch 7, dadurch gekennzeichnet, dass der Querschlitz (5) beidseitig durch zwei Stege (6) begrenzt ist, die von den radialen Endflächen (7) des ersten Kupplungsteils (4) hochragen und sich beim An- bzw. Entkoppeln der Kupplungsteile (4,15) den Rastvorrichtungen (30) entgegenstellend ein Ueberdrehen des Kupplungsringes (21) über die Kugelkalotten (9) hinaus verhindern.

9. Kupplung nach den Ansprüchen 1,2,4 bis 6,7 und 8, dadurch gekennzeichnet, dass der Kupplungsring (21) aus einem Material besteht, das durch eine kleinere Beanspruchung verformbar ist als dajenige der Kupplungsteile (4,15).

**Fig.1**

1/4

# Fig. 2

# Fig. 3

45°

# Fig. 4

3/4

**Fig.5**

**Fig.6**

4/4

**Fig.7**

Nummer der Anmeldung

EP 80 10 3249

Europäisches
Patentamt

**EUROPÄISCHER RECHERCHENBERICHT**

| | **EINSCHLÄGIGE DOKUMENTE** | | | **KLASSIFIKATION DER ANMELDUNG (Int Cl.³)** |
|---|---|---|---|---|
| Kategorie | Kennzeichnung des Dokuments mit Angabe, soweit erforderlich, der maßgeblichen Teile | betrifft Anspruch | | |
| | CH - A - 463 239 (BUCHLI) <br> * Das ganze Dokument * | 1-3 | | F 16 D 1/10 <br> B 29 F 1/06 |
| | -- | | | |
| | US - A - 2 738 210 (HJEMBO) <br> * Das ganze Dokument * | 1-3 | | |
| | -- | | | |
| | DE - B - 1 169 215 (SCHUURINK) <br> * Das ganze Dokument * | 1,4,6 | | |
| | -- | | | **RECHERCHIERTE SACHGEBIETE (Int. Cl.³)** |
| | DE - A - 2 735 002 (YOSHIDA KOGYO) <br> * Das ganze Dokument * | 1,6 | | F 16 D 1/00 <br> B 29 F 1/00 <br> B 23 B 31/00 <br> F 16 B |
| | -- | | | |
| | DE - A - 2 752 916 (SCHNEIDER) <br> * Das ganze Dokument * | 1,2,7 | | |
| | -- | | | |
| A | CH - A - 581 273 (LACREX BREVETTI) | | | |
| A | DE - C - 937 084 (SCHEIL) | | | |
| A | GB - A - 944 649 (GARBE LAHMEYER) | | | **KATEGORIE DER GENANNTEN DOKUMENTE** |
| A | CH - A - 450 867 (FILIBERTI) | | | X: von besonderer Bedeutung <br> A: technologischer Hintergrund |
| A | CH - A - 347 406 (POSALUX) | | | O: nichtschriftliche Offenbarung <br> P: Zwischenliteratur |
| | ---- | | | T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | | &: Mitglied der gleichen Patentfamilie, übereinstimmendes Dokument |
| Recherchenort <br> Den Haag | Abschlußdatum der Recherche <br> 18-09-1980 | | Prüfer <br> BALDWIN | |

EPA form 1503.1 06.78